Europäisches Patentamt

European Patent Office

Office européen des brevets

(11) Publication number: **0 425 238 A1**

## (12) EUROPEAN PATENT APPLICATION

(21) Application number: 90311598.8

(22) Date of filing: 23.10.90

(51) Int. Cl.5: **F16C 3/035**, B62D 1/18, B62D 33/06

(30) Priority: 23.10.89 JP 123744/89

(43) Date of publication of application:
02.05.91 Bulletin 91/18

(84) Designated Contracting States:
DE FR GB

(71) Applicant: **FUJI KIKO COMPANY LIMITED**
**1-13, Nihonbashihon-cho 3-chome Chuo-Ku**
**Tokyo(JP)**

(72) Inventor: **Yamamoto, Yoshimi**
**c/o Fuji Kiko Company Ltd., Washizu-Plant**
**2028 Washizu, Kosai-shi, Shizuoka-ken(JP)**

(74) Representative: **Blanco White, Henry Nicholas**
**et al**
**ABEL & IMRAY Northumberland House**
**303-306 High Holborn**
**London WC1V 7LH(GB)**

(54) Telescopic shaft for rotational torque transmission.

(57) A telescopic torque transmission shaft comprises a pair of shafts (3, 4) telescopically engaged to each other. The pair of shafts are formed into polygon shafted configuration. At least two leaf springs (11) with a predetermined length are provided along different plans on the inner one of the shaft. Roller bearings (16) are also provided between the coupled portion of the shafts to be biased onto the inner periphery of the outer shaft for eliminating play between the inner and outer shafts with maintaining smoothness of relative axial movement and assuring torque transmission, and whereby successfully eliminate uncomfortable noise.

**FIG.1**

## TELESCOPIC SHAFT FOR ROTATIONAL TORQUE TRANSMISSION

The present invention relates generally to a telescopic shaft for transmitting rotational torque, such as a steering column shaft in an automotive steering system. More specifically, the invention relates to a telescopic torque transmission shaft which is suitable for use in a steering system of a cab-over type vehicle which has a tiltable cabin for exposing an engine room for maintenance.

In general, a steering column shaft for a cab-over type vehicle has telescopic construction so as to permit a cab-over cabin to expose an engine room. Conventionally, such type of steering column shaft comprises two hollow shafts telescopically coupled to each other. For assuring steering torque transmission, the shafts are splined to each other in a manner to permit axial movement relative to each other.

Such conventional construction of the steering column shaft is required to provide a clearance between the inner periphery of the outer shaft and the outer periphery of the inner shaft for establishing spline engagement therebetween. This clearance may serve to create play between the coupled shafts during vehicular driving and thus can creates uncomfortable noise. In order to eliminate play between the coupled shafts, Japanese Patent First (unexamined) Publication 61-211527 proposes a shaft construction to provide all bearings between the inner and outer shafts. Though such construction is successful in eliminating play between the shafts and thus eliminate uncomfortable noise, it requires specific construction of the shaft to form clearances to receive the ball bearings.

In view of the drawbacks in the prior art set forth above, it is an object of the present invention to provide a telescopic torque transmission shaft which simple construction but successfully eliminate play between shafts.

In order to accomplish aforementioned and other objects, a telescopic torque transmission shaft, according to the present invention, a pair of shafts are formed into polygon shafted configuration. At least two leaf springs with a predetermined length are provided along different plans on the inner one of the shaft. Roller bearings are also provided between the coupled portion of the shafts to be biased onto the inner periphery of the outer shaft for eliminating play between the inner and outer shafts with maintaining smoothness of relative axial movement and assuring torque transmission, and whereby successfully eliminate uncomfortable noise.

According to one aspect of the invention, a telescopic rotary shaft for transmitting rotational torque, comprises:

a first hollow shaft at least partially formed into polygon cross section;

a second shaft at least partially formed into polygon cross section, the portion having polygon cross section being inserted into interior space of said first hollow shaft with placing the axis in essential alignment with the axis of said first hollow shaft, and said second shaft being oriented within said interior space of said first shaft with engagement with portions of said first hollow shaft at corners for restricting angular displacement relative to said first hollow shaft and defining clearances between the outer plain surface thereof and inner plain surface of said first hollow shaft; and

at least two bearing assemblies disposed within at least two clearances between said first hollow shaft and said second shaft, said bearing assemblies permitting relative axial movement between said first hollow shaft and said second shaft.

In the preferred construction, the telescopic torque transmission shaft as set forth above may further comprise at least two springs disposed within at least two clearances together with said bearing assembies so as to resiliently bias associated bearing assembly in a direction essentially transverse to the axes of said first hollow shaft and said second shaft oriented in alignement. Also, each of said bearing assemblies may comprise a retainer plate formed with a plurality of slots extending transversely, and a plurality of needle bearings rotatably disposed within said slots.

The springs may be secured on the outer periphery of said second shaft and said bearing assemblies are axially movable following said first hollow shaft relative to said second shaft.

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

Fig. 1 is a section of a telescopic torque transmission shaft according to the present invention,

Fig. 2 is a similar section to Fig. 1 but showing in a condition where the telescopic shaft is expanded;

Fig. 3 is a section taken along line A - A of Fig. 1;

Fig. 4 is a section taken along line B - B of Fig. 1; and

Fig. 5 is a section taken along line C - C of Fig. 1.

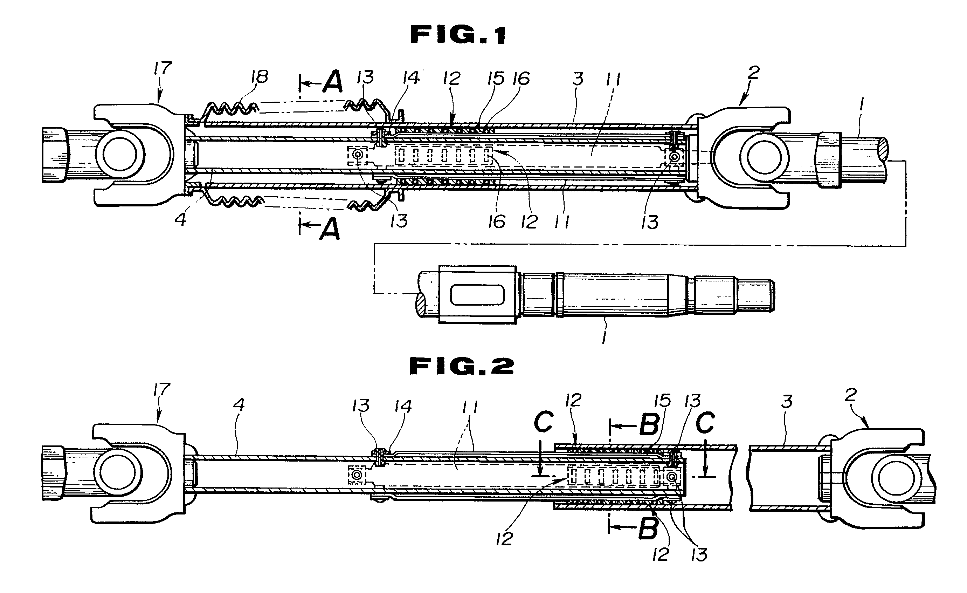

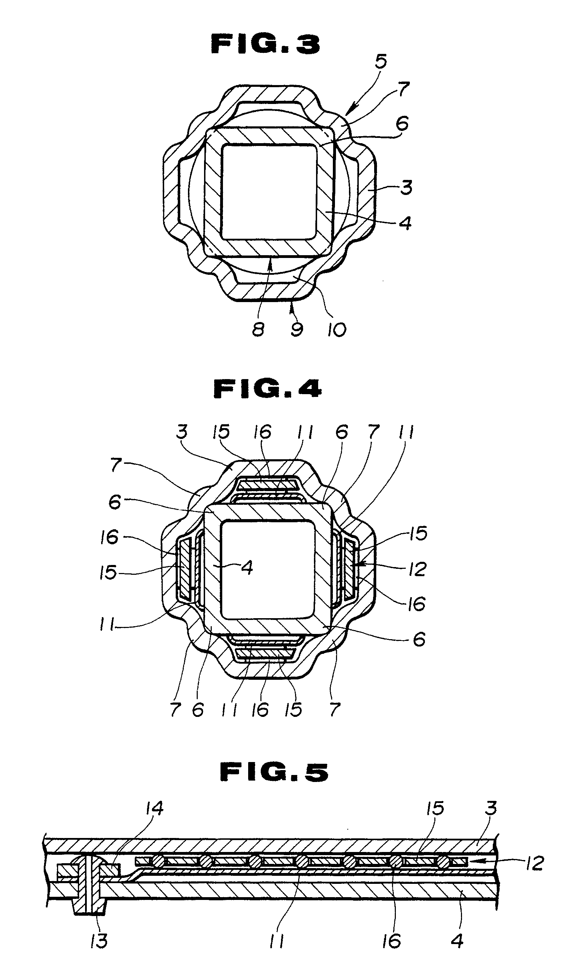

Referring now to the drawings, particularly to Figs. 1 and 2, the preferred embodiment of a telescopic torque transmission shaft, according to the present invention, comprises an upper shaft 3 which is connected to a steering shaft 1 via a universal joint 2. The upper shaft 3 is telescopically engaged with a lower shaft 4 for axial movement with respect to the latter. As shown in Fig. 3, the upper shaft 3 is formed into essentially an octagon shaped cross-section. On the other hand, the lower shaft 4 is formed into essentially square shaped cross-section. Each of the upper and lower shafts 3 and 4 are made from tubes by way of drawing, for example. The upper shaft 3 has essentially W-cross section 5 at every other face in circumferential direction. The W-cross section face 5 of the outer shaft 3 defines bent recess 7. With engaging respective corners 6, the lower shaft 3 is received within the interior space of the upper shaft 3 in a manner shown in Figs. 1 through 3. With this, the planer sections 8 of the inner shaft 4 opposes associated faces of planer sections 9 of the outer shaft 3 in spaced apart relationship to each other to define therebetween clearances 10.

An elongated leaf springs 11 with essentially reversed U-shaped cross section are supported on respective planer sections of the inner shaft 4 and extend in parallel relationship with the longitudinal axis. Both longitudinal ends of the leaf springs 11 are secured on the associated planer sections of the inner shaft 4 by means of rivets 13 with washers 14. On respective of the leaf springs 11, bearing assemblies 12 are supported. As shown in Fig. 5, each bearing assembly 12 comprises a retainer plate member 15 formed therewith a plurality of needle bearing receptacle slots, in which are received needle bearings 16. Since the bearing assembly 12 is disposed between the inner periphery of the outer shaft 3 and the leaf spring 11, the rotation of the needle bearings 16 is smoothly promoted for assuring smooth axial movement of the upper shaft 3 with maintaining steady torque transmission.

The lower end of the lower shaft 4 is connected to a universal joint 17 which is, in turn, connected to a steering mechanism, such as steering gear box. As can be seen, the lower end portion of the lower shaft 4 is covered by a bellows form cover member 18. As can be seen, the bellows form cover member 18 is connected to the upper shaft 3 at the upper end and to the lower end of the lower shaft 4 at the lower end thereof.

It should be appreciated that though the shown embodiment employs four bearing assemblies provided respective clearances 10, it is only essential to provide a plural bearing assembly to and not necessarily for all clearances.

In the embodiment set forth above, when the upper shaft 3 is rotatingly operated, respective corner 6 of the lower shaft 4 are engaged with the bent recesses 7 for restricting the lower shaft from causing relative angular displacement with respect to the upper shaft. Therefore, the lower shaft 4 rotates together with the upper shaft 3. Furthermore, torque transmission is also assisted by the bearing assemblies 12 disposed between opposing plains 8 and 9 of the lower and upper shafts 4 and 3. Therefore, rotational torque transmission is assured.

On the other hand, when the upper shaft 3 is axially shifted relative to the lower shaft 4, the bearing assemblies 12 follows with the upper shaft 3 by rotation of the needle bearings 16 carrying the retainer plates 15. Therefore, smooth axial movement of the upper shaft 3 relative to the lower shaft 4 can be assured. Furthermore, since the leaf springs 11 disposed between the upper and lower shafts 3 and 4 restrict relative movement between the upper and lower shafts in a direction transverse to the axes of the shafts, relative play of the shafts which serves as cause of uncomfortable noise, can be successfully eliminated. Furthermore, since the axes of the upper and lower shafts 3 and 4 are maintained in alignment by means of resilient force of the leaf springs 11. Therefore, even when the relative displacement is caused to angularly offset the axes of the upper and lower shafts 3 and 4, the stress to be exerted on the shafts can be successfully absorbed by the leaf springs. As a result, excess bending stress may not be exerted on the shafts.

As can be appreciated, the present invention fulfills all of the objects and advantages sought therefor.

While the present invention has been discussed hereabove in terms of the preferred embodiment of the invention, the invention should be appreciated to be restricted for the shown embodiment. The invention can be embodied in various fashion. Therefore, the invention should be interpreted to include all possible embodiments and modifications which can be embodies without departing from the principle of the invention set out in the appended claims.

## Claims

1. A telescopic rotary shaft for transmitting rotational torque, comprising:
a first hollow shaft at least partially formed into polygon cross section;
a second shaft at least partially formed into polygon cross section, the portion having polygon cross section being inserted into interior space of said first hollow shaft with placing the axis in essential alignement with the axis of said first hollow shaft,

and said second shaft being oriented within said interior space of said first shaft with engagement with portions of said first hollow shaft at corners for restricting angular displacement relative to said first hollow shaft and defining clearances between the outer plain surface thereof and inner plain surface of said first hollow shaft; and

at least two bearing assemblies disposed within at least two clearances between said first hollow shaft and said second shaft, said bearing assemblies permitting relative axial movement between said first hollow shaft and said second shaft.

2. A telescopic torque transmission shaft as set forth in claim 1, which further comprise at least two springs disposed within at least two clearances together with said bearing assemblies so as to resiliently bias associated bearing assembly in a direction essentially transverse to the axes of said first hollow shaft and said second shaft oriented in alignement.

3. A telescopic torque transmission shaft as set forth in claim 1, wherein each of said bearing assemblies comprises a retainer plate formed with a plurality of slots extending transversely, and a plurality of needle bearings rotatably disposed within said slots.

4. A telescopic torque transmission shaft as set forth in claim 2, wherein each of said bearing assemblies comprises a retainer plate formed with a plurality of slots extending transversely, and a plurality of needle bearings rotatably disposed within said slots.

5. A telescopic torque transmission shaft as set forth in claim 4, wherein said springs are secured on the outer periphery of said second shaft and said bearing assemblies are axially movable following said first hollow shaft relative to said second shaft.

# FIG.1

# FIG.2

EP 0 425 238 A1

# FIG.3

# FIG.4

# FIG.5

European
Patent Office

**EUROPEAN SEARCH
REPORT**

Application Number

**EP 90 31 1598**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 281 723  (FFV AUTOTECH)<br>* column 3, line 17 - column 4, line 8; figures 1-3 *<br>- - - | 1-5 | F 16 C<br>3/035<br>B 62 D 1/18<br>B 62 D 33/06 |
| A | DE-A-2 843 935  (UNI-CARDAN)<br>* page 10, last paragraph - page 11, paragraph 1; figure 15 *<br>- - - | 1 | |
| A | EP-A-0 189 011  (AFFÄRSVERKET FFV)<br>* abstract *<br>- - - - - | 1 | |
| | | | **TECHNICAL FIELDS SEARCHED (Int. Cl.5)**<br><br>F 16 C<br>F 16 D<br>B 62 D |

The present search report has been drawn up for all claims

| Place of search | Date of completion of search | Examiner |
|---|---|---|
| Berlin | 22 January 91 | BROYDE M P |